# EUROPEAN PATENT SPECIFICATION

(11) **EP 4 089 570 B1**
(45) Date of publication and mention of the grant of the patent: **17.09.2025**
(21) Application number: 21173871.1
(22) Date of filing: 14.05.2021
(51) Int. Cl.: G06F 40/40, G10L 15/22, G10L 15/26, G10L 15/32, G06F 3/16, G10L 15/18

(54) **TECHNIQUES TO PROVIDE A CUSTOMIZED RESPONSE FOR USERS COMMUNICATING WITH A VIRTUAL SPEECH ASSISTANT**
TECHNIKEN ZUR BEREITSTELLUNG EINER SPEZIFISCHEN ANTWORT FÜR BENUTZER, DIE MIT EINEM VIRTUELLEN SPRACHASSISTENTEN KOMMUNIZIEREN
TECHNIQUES PERMETTANT DE FOURNIR UNE RÉPONSE PERSONNALISÉE POUR DES UTILISATEURS COMMUNIQUANT AVEC UN ASSISTANT VOCAL VIRTUEL

(43) Date of publication of application: 16.11.2022
(73) Proprietor: Deutsche Telekom AG, 53113 Bonn (DE)
(72) Inventor: Minow, Jascha, 64625 Bensheim (DE); Jahn, Carl, 65191 Wiesbaden (DE); Platschek, Martin Michael, 12557 Berlin (DE); El Mallouki, Said, 56329 St. Goar (DE)
(74) Representative: Braun-Dullaeus Pannen Emmerling Patent- & Rechtsanwaltspartnerschaft mbB

(56) References cited:
- US-A1- 2019 325 873
- US-B1- 10 453 117
- SU CHENGWEI ET AL: "A Re-Ranker Scheme For Integrating Large Scale NLU Models", 2018 IEEE SPOKEN LANGUAGE TECHNOLOGY WORKSHOP (SLT), IEEE, 18 December 2018 (2018-12-18), pages 670 - 676, XP033516955, [retrieved on 20190211], DOI: 10.1109/SLT.2018.8639519

## Description

The present invention relates to the technical field of virtual speech assistants and, in particular, to a method, a server and a communication system to provide a customized response for users communicating with a virtual speech assistant The virtual speech assistants can also be called virtual voice assistants.

At the beginning, some terms that may be relevant to the invention are explained and the prior art is briefly described.

In today's society, virtual speech assistants are taking up more and more of the everyday life. It is no longer just a matter of setting a timer or entering a reminder. Rather, people are already ordering food by voice and are even making bank transfers by voice. The challenge is that one and the same virtual assistant has to support different areas (domains) such as timer/reminder/alarm, food ordering, money transfer, to-do list, weather, TV, radio, Smart-Home, and so on.

For many users, it is increasingly important that the virtual assistant also responds to the personal needs of the customer and, above all, takes into account the context of a request.

The fact that the virtual assistant must support different domains with completely different commands and must also take into account the respective user context or user preferences results in the following problems:
For the modeling of the Natural Language Understanding (NLU) component, a two-step process is used today. In the first step of **NLU** processing, the command e.g. "What is the weather like in Darmstadt?" is analyzed with a dispatcher model to determine to which domain the command belongs. For the command "What is the weather like in Darmstadt?" the domain WEATHER would be the result with the highest confidence. For "What will be on TV tomorrow night?" the domain TV would be the result with the highest confidence. In the second step, the command is passed on to the respective Domain Model or Refined Model, which can then determine the Intent or the Entity.

Distribution algorithms for incoming audio signals of a virtual speech assistant are known from the prior art. Such distribution algorithms are also referred to as "dispatcher models" and are used to route voice commands from a user to the correct domain or the appropriate specific model for analyzing and executing the request. In concrete terms, this means that the user transmits a voice command or a voice request as an audio signal to the virtual assistant by means of his or her user equipment. The user equipment can record this audio signal with its microphone, for example. Today's virtual speech assistants have quite a wide range of different domains, different skills, or specific models regarding user requests. For example, virtual assistants can make calls, send messages, find information from the Internet, calculate routes, play music, find devices, and much more, wherein numerous subsets of commands or requests still exist within each of these domains. A distribution algorithm, i.e. the "dispatcher model", has the task of passing the received audio signal converted into text as quickly as possible to the specific model provided for this purpose for analysis and execution of the query. The audio signal is converted to text using speech-to-text algorithms.

The patent US 10 453 117 B1 and the article from Su Chengwei et al "A Re-Ranker Scheme For integrating Large Scale NLU Models" (2018 IEEE Spoken Language technology workshop, 18 December 2018, pages 670-676) both disclose some of the conventional techniques.

The disadvantage of these conventional techniques is:
- The dispatcher model must be omniscient and know all utterances/commands that belong to a certain domain and classify them correctly, which is simple not possible and it would consume major resources to try to reach this aim;
- For commands that are similar in structure and differ only in the entities e.g. "Turn on the light" (Domain: Smarthome), "Turn on FFH" (Domain: Radio), "Turn on RTL" (Domain: TV) it is impossible to train the dispatcher model in such a way that an overfitting does not take place at the same time. Overfitting leads in general to false predictions;
- Furthermore, it is not possible to include specific user entities or specific user models in the dispatcher model. E.g. a smart-home device name. Because with every change of any user of a name for a smart-home device the "global" dispatcher model would have to be trained, tested and deployed again.
- For some commands it is also important to include the user context during the NLU analysis. E.g. the command "Switch on RTL" can mean for a specific user that the "right table lamp" has to be switched on, whereas for another user the TV station RTL is meant and again for another user the local radio station RTL is meant.
- The command is sent via voice from the user via a device (e.g. smart speaker) to the platform. In the first step, the audio is transcribed into text using an Automatic Speech Recognition (ASR) component (STT). The ASR component returns a list of possible transcriptions as a result. e.g. For the command "Radio on" the following transcriptions are possible depending on pronunciation, accent, ambient sounds or speed: "Radio on", "Dio on", "Rad Deo on", "Radium on". Not always the result with the lowest Word Error Rate (Word Error Rate) or highest Confidence is also the most suitable result for further processing in NLU. With the current approach there is no possibility to bring another ASR result into the NLU analysis, e.g. if the confidence of the result from the dispatcher model would fall below a certain threshold.

The present invention is therefore based on the task of providing techniques for generating a suitable response for a user by a virtual speech assistant and thus eliminating at least in part the disadvantages mentioned above.

The present invention solves this task by means of the independent claims.

The features of the various aspects of the invention described below or of the various embodiments can be combined with each other, unless this is explicitly excluded or is technically imperative.

According to a first aspect of the invention, there is described a method to provide a customized response for users communicating with a virtual speech assistant,
wherein the virtual assistant is configured to receive a request from the user and to forward the request via a communication network to a server that is configured to process the request by means of skills of at least two domain models and to deliver the response back to the virtual assistant, wherein the method comprises the following steps:
- receiving an audio request of the user as an audio input by the server;
- transcribing the audio request to a text request by the server;
- starting a selection process to select a suitable domain model or skill regarding the text request by the server, wherein the selection process comprises the following steps:
   ∘ provisioning of a Matching-Score-Analyzer by each of the domain models, wherein the Matching-Score-Analyzers differ from each other;
      ▪ the Matching-Score-Analyzers are programmed to take the individual features of the domain models or the skills into account. In addition, the Matching-Score-Analyzers is adjusted to take specific user preferences and/or user context into account. This makes the Matching-Score-Analyzers very flexible and they can be tailored to the individual user, the main model and/or skill.
   ∘ using the text request as input for the Matching-Score-Analyzers and calculating a respective Domain-Matching-Score for the different domains;
      ▪ as explained above, since the Matching-Score-Analyzers differ from each other, this will result in general in different Domain-Matching-Scores for each analysis.
   o comparing the resulting Domain-Matching-Scores and selecting the domain model that is associated to the highest Domain-Matching-Scores as the selected domain model to process the text request;
      ▪ the Domain-Matching-Scores indicates a probability how suitable the respective domain model or skill will be regarding the processing of the request. Hence, it is assumed that the domain model whose Matching-Score-Analyzers yields the highest Domain-Matching-Scores will result in the best response for the user if the respective model processes the request. This comparison is
      implemented as a Matching-Evaluation-Module on a processing unit of the server.
- processing the text request with the selected domain model and transmitting the response to the virtual assistant.
   ∘ Hence, the processing is performed with the selected domain model or with the selected skill that is assumed to deliver the best response for the user. The response can be an answer to a question, switching on a certain smart-home device or another typical task of a virtual assistant.

By performing a kind of pre-analysis by using the Matching-Score-Analyzers before processing the request with one of the different domain models or skills, it is possible to gain a quick assessment which domain model will deliver the best result. Since the Matching-Score-Analyzers can be programmed to include specific features of the individual domain models and in principle additionally features of the user context or user preferences, the resulting Domain-Matching-Score delivers a kind of information that is more individual with respect to domain models and/or with respect to the users as a generic dispatcher model that is commonly used to select the domain model that shall process the request.

The decision as to which skill or domain model is responsible for a request and its processing is thus, according to the invention, not decisively made by the dispatcher.

Instead, a bottom-up approach is used, in which the Matching-Score-Analyzers - a match component in the skill - decides whether the request can be processed by the skill or not, with reference to the user context and user preferences. This also has the advantage that user context and user preferences are taken into account during the NLU analysis. Another advantage is that one and the same skill can be responsible for different users for the same command or not.

Still a further advantage is that the domain classifier or dispatcher model does not have to be omniscient. This also means that the respective domain models do not have to be retrained when user entities change, but this logic is mapped in the match analyzer. This in turn has the advantage that changes to user preferences are immediately available.

In an embodiment, the server creates a table of possible transcribing results, wherein a first column of the lists the possible text requests and a second column lists respective quality values of the transcribing results.

The results of the transcribing algorithm are in general not unique. In principle there are existing multiple possible transcribing results, especially if some terms of the audio request sound similar. Hence, when creating the different transcribing results a quality value or confidence value is also created that indicates the goodness of each of the possible resulting text requests. Providing more than one text request provides the advantage that the Matching-Score-Analyzers can perform their analysis based on more than just one version of the text request. This might be necessary because there is no guarantee that the text request with the highest quality value is actually the transcribing result intended by the user.

In an embodiment, the server starts the selection process with the text request that shows the highest quality value of the table. This provides the advantage that computer resources are efficiently used and latency is reduced in general because the text request with the highest quality value reflects in most cases the actual intention of the user request, so that no further selection processes of further possible text requests is necessary. In particular, the algorithm can assume that the correct domain model or skill is found if the respective Domain-Matching-Scores exceeds a predefined level. In an embodiment, the server continues the selection process with at least a further text request from the table, in particular with the text request with the next-best quality value, if the resulting Domain-Matching-Scores from the actual evaluated text request are below a predefined first threshold.

This provides the advantage of a feedback loop if the actual evaluated text request does not provide Domain-Matching-Scores with a desired value or quality. In these cases, it is possible that the text request, even if it has the highest quality value does not correspond to the actual intent of the user. Therefore, the selection process can continue with the lower ranked transcribed text request from the table. Another advantage of the feedback loop is that if the match confidence of the skill is too low, the next STT result can be used for a complete reprocessing of the command. It does not matter whether the transcribed STT result is understandable for humans, but rather that the entire processing chain can successfully process the command and not whether the word error rate is the lowest.

In an embodiment, the server only continues the selection process for a predefined number of further text requests. This provides the advantage that it is possible to limit the latency of the response to the user. Without an adequate Break-off criterion, the selection process could simply take too long and in addition consume computational resources of the server.

In an embodiment, the server the server continues the selection process with at least a further text request from the table, in particular with the text request with the next-best quality value, if selection process is within a predefined time limit.

This provides the advantage of creating further Domain-Matching-Scores within an acceptable time limit. To reach this purpose, the predefined time limit is set to a value that is typically acceptable by users. So, even if the Domain-Matching-Scores of the text request with the highest quality value results in satisfactory Domain-Matching-Scores - so that normally a further investigation of further text requests from the list would be omitted - it is possible that a further text request would actually result in an overall best Domain-Matching-Score. The domain model that corresponds to this globally best Domain-Matching-Score is then used to process the respective further text request. Again this selection can be performed by the Matching-Evaluation-Module.

In an embodiment, the Matching-Score-Analyzers calculate the respective Domain-Matching-Scores in parallel or serial computing mode. Typically, the server provides more than one processing unit or virtual processing units in which the algorithms of the Matching-Score-Analyzers are implemented. If an actual load factor of the server is low and if there is enough capacity to do parallel computing, the Matching-Score-Analyzers calculate the respective Domain-Matching-Scores in parallel computing mode to speed up the selection process and to reduce latency. If an actual load factor of the server is high, then serial computing mode is used so that requests from multiple virtual assistants can be processed in parallel on the server.

In an embodiment, the serial or the parallel computing mode are terminated if the, in particular the last, calculated Domain-Matching-Scores exceeds a predefined second threshold.

This provides the advantage of an efficient breakoff criteria if it can be assumed that the appropriate domain model or a skill for further processing the text request is found.

In the invention, the selection process first uses a dispatcher model to choose a subset of the available domain models and/or to determine an order of the available domain models whose Matching-Score-Analyzers shall calculate the respective Domain-Matching-Score.

This provides the advantage of further enhancing the efficiency of the method because the dispatcher model can sort out domain models or skills that are very unlikely to yield in a satisfying respondent for the user. There is no selection process being performed with the Matching-Score-Analyzers of the domain models or skills that have been sorted out by the dispatcher model. In an embodiment, the dispatcher model calculates probability values that indicate the chance that a certain domain model matches the text request and performs its choice based on the probability values. This provides the advantage of suitable criteria to perform the choice. It is also possible to adapt those probability values to further increase the efficiency of the method.

In an embodiment, Matching-Score-Analyzers are updated if the underlying domain model changes. This provides the advantage of adapting the selection process and enhancing the method without having to adapt the global generic dispatcher model. The adaption can be very specific regarding to the individual users and take special interests of the user into account. The changes of the Matching-Score-Analyzers are immediately available to the method.

According to a second aspect of the invention, a server is described to provide a customized response for users communicating with a virtual speech assistant, wherein the server is configured and provides means to perform the steps of the method described above. Typically, the server contains a processing unit, wherein the method can be implemented as algorithm on the processing unit. In addition, the server contains a memory unit and communication interfaces to communicate with a communication network and to exchange data with a user equipment. The virtual speech assistant, i.e. its algorithms, is at least partially implemented on the server.

Advantages of the server according to the invention, in addition to the advantages already described above, include:
Generic: All interfaces and processing are kept generic and do not need to be implemented or configured specifically for a particular use case.
Distributed: Each skill can implement its own logic in the Match component also taking into account the user preferences/context. The only requirement is that the Match component implements a specific interface for communication.
Dynamic: Skills as well as adaptations of new user context/preferences can be done without retraining or model deployment.
Seamless: New skill and skill domains only need to register on existing interface and therefore it is easy to extend the functionality of the Virtual Assistant.

**According** to a third aspect of the invention, a communication system to provide a customized response for users communicating with a virtual speech assistant is disclosed, the system comprising:
- a user equipment configured to record an audio request of the user and configured to send the audio request to a server;
   ∘ the user equipment can be a smart-phone, a smart speaker, a smart watch or a similar device. The user equipment at least provides a communication interface with the virtual speech assistant;
- the server configured to receive the audio request from the user equipment and wherein the server is configured and provides means to perform the steps of the method described above;
- a communication network that provides a data connection to transmit the request and the response between the user equipment and the server.
   ∘ The communication network can be a mobile communication network, WLAN and/or LAN network.

The communication system can be configured to transmit the response the user equipment, and wherein the user equipment provides the response to the user.

The communication system provides the advantages described in the context of the method.

According to a fourth aspect of the invention, a computer program is disclosed, wherein the computer program is implemented on a computer unit and executes the steps of the method described above.

The computer program provides the advantages described in the context of the method.

Further advantageous design features of the present invention are defined in the patent claims.

In the following, preferred embodiments of the present invention are explained with reference to the accompanying figures:
Further advantageous design features of the present invention are defined in the patent claims.

In the following, preferred embodiments of the present invention are explained with reference to the accompanying figures:
- Fig. 1:: shows a flow diagram of the process according to the invention.
- Fig. 2:: shows a technical environment suitable for carrying out the method according to the invention in Fig. 1.

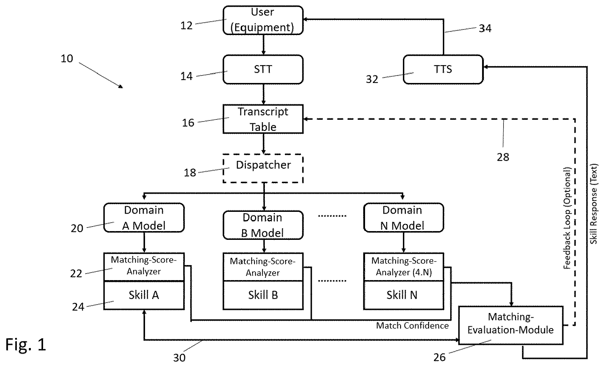

Fig. 1 shows a flow diagram 10 of the process according to the invention.

The method performs the following steps:
Step 12: A user sends an audio request or audio command with the help of user equipment.
Step 14-16: The ASR transcribes the audio request into a list or a table of possible text requests. A Transcript-Queue orders this list according to certain criteria (Word Error Rate, Noise Level) and creates a Confidence as a quality value for each result of the list. The Transcript-Queue always holds the audio and the respective transcribed texts for a request during processing.
Step 18: The text request result with the highest quality value is passed to a dispatcher or a domain classifier. The dispatcher analyzes the text request/command and forwards the request in step 20 to all possible skill domains that exceed a predefined domain confidence, wherein the respective domain confidence is determined by the dispatcher.
Steps 22-24: The respective skill domain models try to extract the respective intents and entities from the given text request. Even if no entities or intents are found in the skill domain model for a command of the request, the command is forwarded to the respective Matching-Score-Analyzer of the skill. The Matching-Score-Analyzers determines by calculating a Domain-Matching-Score to which confidence (match confidence) the command can be processed by the skill, taking into account the intent, the entities, the user context and the user preferences. At this point of processing, the Matching-Score-Analyzer of the skill does not yet create the answer, but rather only examines whether the command and the associated metadata can be processed by the skill.
Step 26: The Domain-Matching-Scores are forwarded to the Matching-Evaluation-Module. The Matching-Evaluation-Module uses the Domain-Matching-Scores of the skills to decide which skill should execute the request. If the match confidences. i.e. the Domain-Matching-Scores, of the skills are below a certain threshold, the Matching-Evaluation-Module has the possibility to start a feedback loop 28 that yields the algorithm again to the transcript table of step 16. In step 16 another possible text request from the table is taken and a new analysis of the command with the other text request is performed. Preferably, the other text request is the one with the next higher confidence value.

In step 30: If the match confidences. i.e. the Domain-Matching-Scores, of the skills are over a certain threshold, the Matching-Evaluation-Module send the text request to the skill with the highest Domain-Matching-Scores to execute the command or text request.

In step 32 the skill response is passed to a text to speech component to create an audio version of the generated response.

In step 34 the response is then sent to the user equipment and provided to the user.

It should be noted that the Matching-Score-Analyzer of the skill does not process the response but only evaluates whether the request including metadata can be processed by the skill. This has the advantage that the Matching-Score-Analyzer can be implemented in a very lightweight and latency optimized way, i.e. the match component would not switch the channel for the command "Switch to Pro Sieben" but rather check if the user has booked the TV package and if the channel is available in the list. For the actual generation of the response of a user's request, it may be important to address further 3rd party API's e.g. for the weather or TV.

The method of Fig. 1 can be executed in optional ways:
If the Domain-Matching-Score falls below a certain threshold, the ASR result with the next highest confidence is selected by the feedback loop for a new analysis through the complete chain. It is important to set a limit for the additional runs in the feedback loop, e.g. to 3, so that the latency of both is kept as low as possible even in case of a negative answer ("I could not understand unfortunately").

The dispatcher/the domain classifier is an optional component and it is also possible that the result from the STT step is sent directly to all available domain models in step 22-24 without pre-evaluation of the domain models by the dispatcher. This would have the advantage that all available domain models and match components of the skill are always included in the analysis. If parallel computing is used this would not lead to a higher latency as it can be assumed that all Matching-Score-Analyzer and Domain Models process the command equally fast. However, as a downside this increases the need for more computational resources. In practice, it is desirable that the number of domains and skills is kept as low as possible, e.g. by adding a dispatcher model upstream or if only a few skills are required for a specific use case or user context and the rest of the skills can be excluded in advance.

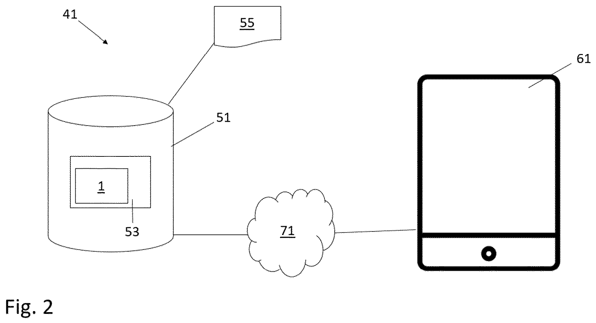

Fig. 2 shows a technical environment 41 that is suitable for carrying out the method according to the invention.

The technical environment 41 comprises a central server 51 and a terminal 61 of a user, which are connected to each other via a communication network 71, in particular the Internet and/or a mobile network. The central server 51 has a computer unit 53 on which the method for generating the algorithm 1 according to Fig. 1 is implemented. In a memory unit 55 associated with the server 51, the server 51 can store domain model, skill, the dispatcher model, etc. The server can comprise more than one computer unit 53 or multiple virtual computing units 53 for parallel computing execution.

A terminal 61 receives a spoken request from a user and forwards the same to the server 51 via the communication network 71, where the request is processed accordingly and a corresponding response is executed and/or returned to the user via the communication network 71.

## Claims

1. Method to provide a customized response for users communicating with a virtual speech assistant,
wherein the virtual assistant is configured to receive an audio request from the user with the help of a user equipment (12) and to forward the request via a communication network to a server that is configured to process the request by means of skills of at least two domain models and to deliver the response back to the virtual assistant, wherein the method comprises the following steps:
**•** transcribing the audio request into a text request (18);
• selecting by the server a suitable domain model among the at least two domain models regarding the text request, wherein the selecting comprises the following steps:
∘ analyzing the text request by a dispatcher (18), wherein the dispatcher further forwards the text request (20) to all possible domain models that exceed a predefined domain confidence, wherein the respective domain confidence is determined by the dispatcher;
∘ trying to extract the respective intents and entities from the text request by each of the domain models selected by the dispatcher (22-24);
o sending the results of the extraction, together with user context and preferences, as inputs to a Matching-Score-Analyzer for each skill of each model (22-24);
o calculating, using the inputs, by each Matching-Score-Analyzer, a respective Domain-Matching-Score for each skill (22-24), indicating the confidence the request can be processed by the skill;
∘ comparing, by a Matching-Evaluation-Module, the resulting Domain-Matching-Scores and selecting the domain model that is associated to the highest Domain-Matching-Score as the selected domain model to process the text request (26);
• processing the text request with the selected domain model and transmitting the response to the virtual assistant.

2. The method of claim 1, wherein the server creates a table of possible transcribing results, wherein a first column of the table lists the possible text requests and a second column of the table lists respective quality values of the transcribing results.

3. The method of claim 2, wherein the selecting of the domain model by the server comprises using the text request that shows the highest quality value of the table.

4. The method of claim 3, wherein the selecting of the domain model by the server comprises using at least a further text request from the table, in particular with the text request with the next-best quality value, if the resulting Domain-Matching-Scores from the actual text request are below a predefined first threshold (28).

5. The method of claim 4, wherein the selecting of the domain model by the server comprises using a predefined number of further text requests, if the resulting Domain-Matching-Scores from each of the previous text requests are below the predefined first threshold.

6. The method of any of the preceding claims, wherein the Matching-Score-Analyzers calculate the respective Domain-Matching-Scores in parallel or serial computing mode.

7. The method of claim 6, wherein the serial computing mode is terminated it the last calculated Domain-Matching-Scores exceeds a predefined second threshold.

8. The method of any of the preceding claims, wherein the dispatcher model calculates probability values that determine the domain confidence that a certain domain model matches the text request.

9. The method of any of the preceding claims, wherein the Matching-Score-Analyzers are updated if the corresponding domain model changes.

10. A server to provide a customized response for users communicating with a virtual speech assistant, wherein the server is configured and provides means to perform the steps of the method according to any of the claims 1-9.

11. A communication system to provide a customized response for users communicating with a virtual speech assistant, the system comprising:
• a user equipment configured to record an audio request of the user and configured to send the audio request to a server;
• the server configured to receive the audio request from the user equipment and wherein the server is configured and provides means to perform the steps of the method according to any of the claims 1-9;
• a communication network that provides a data connection to transmit the request and the response between the user equipment and the server.

12. The communication system of claim 11, wherein the server is configured to transmit the response the user equipment, and wherein the user equipment provides the response to the user.

13. A computer program, wherein the computer program is implemented on a computer unit and executes the steps of method of any of the claims 1-9.

## Patentansprüche

1. Verfahren zum Bereitstellen einer angepassten Antwort für Benutzer, die mit einem virtuellen Sprachassistenten kommunizieren,
wobei der virtuelle Assistent dazu eingerichtet ist, mithilfe eines Benutzerendgeräts (12) eine Audioanfrage von dem Benutzer zu empfangen und die Anfrage über ein Kommunikationsnetzwerk an einen Server weiterzuleiten, der dazu eingerichtet ist, die Anfrage mittels Fähigkeiten von mindestens zwei Domänenmodellen zu verarbeiten und die Antwort zurück an den virtuellen Assistenten auszuliefern, wobei das Verfahren die folgenden Schritte umfasst:
• Transskribieren der Audioanfrage in eine Textanfrage (18);
• Auswählen, durch den Server, eines geeigneten Domänenmodells unter den mindestens zwei Domänenmodellen im Hinblick auf die Textanfrage,
wobei das Auswählen die folgenden Schritte umfasst:
∘ Analysieren der Textanfrage durch einen Dispatcher (18), wobei der Dispatcher ferner die Textanfrage (20) an alle möglichen Domänenmodelle weiterleitet, die eine vordefinierte Domänenkonfidenz überschreiten, wobei die jeweilige Domänenkonfidenz durch den Dispatcher bestimmt wird;
∘ Versuchen, durch jedes von dem Dispatcher (22-24) ausgewählten Domänenmodelle, die jeweiligen Intentionen und Entitäten aus der Textanfrage zu extrahieren;
∘ Senden der Ergebnisse der Extraktion zusammen mit Benutzerkontext und -präferenzen, als Eingaben an einen Abgleichs-Score-Analysator für jede Fähigkeit jedes Modells (22-24);
∘ Berechnen, unter Verwendung der Eingaben, durch jeden Abgleichs-Score-Analysator, eines jeweiligen Domänenabgleich-Scores für jede Fähigkeit (22-24), welche die Konfidenz angibt, dass die Anfrage von der Fähigkeit verarbeitet werden kann;
∘ Vergleichen, durch ein Abgleichs-Auswertungsmodul, der sich ergebenden Domänenabgleich-Scores und Auswählen desjenigen Domänenmodells, das mit dem höchsten Domänenabgleich-Score assoziiert ist, als das ausgewählte Domänenmodell zum Verarbeiten der Textanfrage (26);
• Verarbeiten der Textanfrage mit dem ausgewählten Domänenmodell und Übertragen der Antwort an den virtuellen Assistenten.

2. Verfahren nach Anspruch 1, wobei der Server eine Tabelle möglicher Transskriptionsergebnisse erstellt, wobei eine erste Spalte der Tabelle die möglichen Textanfragen auflistet und eine zweite Spalte der Tabelle jeweilige Qualitätswerte der Transskriptionsergebnisse auflistet.

3. Verfahren nach Anspruch 2, wobei das Auswählen des Domänenmodells durch den Server umfasst, die Textanfrage zu benutzen, die den höchsten Qualitätswert der Tabelle zeigt.

4. Verfahren nach Anspruch 3, wobei das Auswählen des Domänenmodells durch den Server umfasst, mindestens eine weitere Textanfrage aus der Tabelle zu benutzen, insbesondere die Textanfrage mit dem nächstbesten Qualitätswert, falls die sich aus der aktuellen Textanfrage ergebenden Domänenabgleich-Scores unterhalb eines vordefinierten ersten Schwellwerts (28) sind.

5. Verfahren nach Anspruch 4, wobei das Auswählen des Domänenmodells durch den Server umfasst, eine vordefinierte Anzahl weiterer Textanfragen zu benutzen, falls die sich aus jeder der vorhergehenden Textanfragen ergebenden Domänenabgleich-Scores unterhalb des vordefinierten ersten Schwellwerts sind.

6. Verfahren nach einem der vorhergehenden Ansprüche, wobei die Abgleichs-Score-Analysatoren die jeweiligen Domänenabgleich-Scores in einem parallelen oder seriellen Rechenmodus berechnen.

7. Verfahren nach Anspruch 6, wobei der serielle Rechenmodus beendet wird, wenn die zuletzt berechneten Domänenabgleich-Scores eine vordefinierte zweite Schwelle überschreiten.

8. Verfahren nach einem der vorhergehenden Ansprüche, wobei das Dispatchermodell Wahrscheinlichkeitswerte berechnet, die die Domänenkonfidenz dafür bestimmen, dass ein bestimmtes Domänenmodell zu der Textanfrage passt.

9. Verfahren nach einem der vorhergehenden Ansprüche, wobei die Abgleichs-Score-Analysatoren aktualisiert werden, wenn sich das entsprechende Domänenmodell ändert.

10. Server zum Bereitstellen einer angepassten Antwort an Benutzer, die mit einem virtuellen Sprachassistenten kommunizieren, wobei der Server dazu eingerichtet ist und Mittel dafür bereitstellt, die Schritte des Verfahrens nach einem der Ansprüche 1 bis 9 durchzuführen.

11. Kommunikationssystem zum Bereitstellen einer angepassten Antwort für Benutzer, die mit einem virtuellen Sprachassistenten kommunizieren, wobei das System umfasst:
• ein Benutzerendgerät, das dazu eingerichtet ist, eine Audioanfrage des Benutzers aufzuzeichnen und die Audioanfrage an einen Server zu senden;
• den Server, der dazu eingerichtet ist, die Audioanfrage von dem Benutzerendgerät zu empfangen, und wobei der Server dazu eingerichtet ist, Mittel bereitzustellen, um die Schritte des Verfahrens nach einem der Ansprüche 1 bis 9 durchzuführen;
• ein Kommunikationsnetzwerk, das eine Datenverbindung zum Übertragen der Anfrage und der Antwort zwischen dem Benutzerendgerät und dem Server bereitstellt.

12. Kommunikationssystem nach Anspruch 11, wobei der Server dazu eingerichtet ist, die Antwort an das Benutzerendgerät zu übertragen, und wobei das Benutzerendgerät die Antwort an den Benutzer bereitstellt.

13. Computerprogramm, wobei das Computerprogramm auf einer Computereinheit implementiert ist und die Schritte des Verfahrens nach einem der Ansprüche 1 bis 9 ausführt.

## Revendications

1. Procédé de fourniture d'une réponse personnalisée aux utilisateurs communiquant via un assistant vocal virtuel,
dans lequel l'assistant virtuel est configuré pour recevoir une demande audio de l'utilisateur à l'aide d'un équipement d'utilisateur (12) et transférer la demande via un réseau de communication vers un serveur qui est configuré pour traiter la demande au moyen des compétences d'au moins deux modèles de domaine et renvoyer la réponse à l'assistant virtuel, dans lequel le procédé comprend les étapes suivantes :
• transcription de la demande audio en une demande textuelle (18) ;
• sélection par le serveur d'un modèle de domaine adéquat parmi au moins deux domaines de modèle concernant la demande textuelle,
dans lequel la sélection comprend les étapes suivantes :
∘ l'analyse de la demande textuelle par un répartiteur (18), dans lequel le répartiteur transfère ensuite la demande textuelle (20) à tous les modèles de domaine possibles qui dépassent une confiance de domaine prédéfinie, dans lequel la confiance de domaine prédéfinie est déterminée par le répartiteur ;
∘ la tentative d'extraction des intentions et entités respective de la demande textuelle par chacun des modèles de domaine sélectionnés par le répartiteur (22-24) ;
∘ l'envoi des résultats de l'extraction, conjointement au contexte et préférences d'utilisateur, comme entrées dans un analyseur de score de correspondance pour chaque compétence de chaque modèle (22-24) ;
∘ le calcul, en utilisant les entrées, par chaque analyseur de score de concordance, d'un score de concordance de domaine respectif pour chaque compétence (22-24), en indiquant avec quelle confiance la demande peut être traitée par la compétence ;
∘ la comparaison, par un module d'évaluation de concordance, des scores de domaine de concordance de résultat et la sélection du modèle de domaine qui est associé au score de concordance de domaine le plus hait pour traiter la demande textuelle (26) ;
• le traitement de la demande textuelle avec le modèle de domaine sélectionné et la transmission de la réponse à l'assistant virtuel.

2. Procédé selon la revendication 1, dans lequel le serveur crée un tableau de résultats de transcription possibles, dans lequel une première colonne du tableau liste les demandes textuelles possibles et une deuxième colonne du tableau liste des valeurs de qualité respectives des résultats de transcription.

3. Procédé selon la revendication 2, dans lequel la sélection du modèle de domaine comprend l'utilisation de la demande textuelle qui montre la plus haute valeur de qualité du tableau.

4. Procédé selon la revendication 3, dans lequel la sélection du modèle de domaine par le serveur comprend l'utilisation d'au moins une demande textuelle supplémentaire du tableau, en particulier avec la demande textuelle avec la valeur de meilleure qualité suivante, si les scores de concordance de domaine résultant de la demande textuelle effective sont au-dessous d'un premier seuil prédéterminé (28).

5. Procédé selon la revendication 4, dans lequel la sélection du modèle de domaine par le serveur comprend l'utilisation d'un nombre prédéterminé de demandes textuelles supplémentaires, si les scores de concordance de domaine résultant de chacune des demandes textuelles précédentes sont au-dessous du premier seuil prédéfini.

6. Procédé selon une quelconque des revendications précédentes, dans lequel les analyseurs de score de concordance calculent les scores de concordance de domaine respectifs en mode de calcul parallèle ou en série.

7. Procédé selon la revendication 6, dans lequel le mode de calcul en série prend fin si le dernier score de concordance de domaine calculé dépasse un deuxième seuil prédéfini.

8. Procédé selon une quelconque des revendications précédentes, dans lequel le modèle de répartiteur calcule des valeurs de probabilité qui déterminent la confiance de domaine qu'un certain modèle de domaine concorde avec la demande textuelle.

9. Procédé selon une quelconque des revendications précédentes, dans lequel les analyseurs de score de concordance sont mis à jour si le modèle de domaine correspondant change.

10. Serveur fournissant une réponse personnalisée à des utilisateurs communiquant avec un assistant vocal virtuel, dans lequel le serveur est configuré et fournit des moyens pour mettre en œuvre les étapes du procédé selon une quelconque des revendications 1 à **9.**

11. Système de communication fournissant une réponse personnalisée aux utilisateurs communiquant avec un assistant vocal virtuel, le système comprenant
• un équipement d'utilisateur configuré pour enregistrer une demande audio de l'utilisateur et configuré pour envoyer la demande audio à un serveur ;
• le serveur étant configuré pour recevoir la demande audio de l'équipement d'utilisateur et dans lequel le serveur est configuré et fournit des moyens pour mettre en œuvre les étapes du procédé selon une quelconque des revendications 1 à 9 ;
• un réseau de communication qui fournit une connexion de données pour transmettre la demande et la réponse entre l'équipement d'utilisateur et le serveur.

12. Système de communication selon la revendication 11, dans lequel le serveur est configuré pour transmettre la réponse à l'équipement d'utilisateur et dans lequel l'équipement d'utilisateur fournit la réponse à l'utilisateur.

13. Programme informatique, dans lequel le programme informatique est implémenté sur une unité informatique et exécute les étapes du procédé selon une quelconque des revendications 1 à 9.
